# EUROPEAN PATENT APPLICATION

(11) **EP 4 769 618 A1**
(43) Date of publication of application: **01.07.2026**
(21) Application number: 25226413.0
(22) Date of filing: 22.12.2025
(51) Int. Cl.: H01M 10/0562, H01M 10/058

(54) **RELEASE FILM AND OXIDE SOLID-STATE ELECTROLYTE MEMBRANE**

(30) Priority: 25.12.2024 CN 202411928500
(71) Applicant: Hon Hai Precision Industry Co., Ltd., New Taipei 236 (TW); SolidEdge Solution Inc., Hsinchu 300 (TW)
(72) Inventor: CHEN, WEN-CHUNG, 300 Hsinchu City (TW); KAO, JING-KAI, 300 Hsinchu City (TW); CHANG, TSENG-LUNG, 300 Hsinchu City (TW)
(74) Representative: Metida

(57) **Abstract**

The present disclosure relates to a release film for an oxide solid-state electrolyte membrane. The release film includes a release substrate layer, and an EVA functionalized coating applied to a surface of the release substrate layer, wherein the EVA functionalized coating has a vinyl acetate content ranging from 10% to 50%. The present disclosure further relates to an oxide solid-state electrolyte membrane including the release film, an oxide solid-state electrolyte membrane body, and a carrier. The oxide solid-state electrolyte membrane body is positioned between the release film and the carrier, and the release film is bonded to the oxide solid-state electrolyte membrane body through the EVA functionalized coating.

## Description

### CROSS-REFERENCE TO RELATED APPLICATION(S)

The present application claims the benefit and priority to Chinese Patent Application Serial No. 202411928500.1, filed on December 25. 2024, in China State Intellectual Property Administration, and the content of which is hereby fully incorporated by reference into the present application.

### FIELD

The subject matter herein generally relates to solid-state electrolyte technologies, and more particularly, to a release film and an oxide solid-state electrolyte membrane.

### BACKGROUND

Compared with traditional liquid lithium-ion batteries, all-solid-state lithium-ion batteries have advantages such as excellent safety performance, high energy density, and good cycle performance, which have attracted increasing attention in recent years. As a core material in all-solid-state batteries, the solid-state electrolyte directly determines the performance of all-solid-state batteries. Oxide solid-state electrolytes have many advantages, including high ionic conductivity, a wide electrochemical window, high mechanical strength, air stability, and stability against metallic lithium, making them highly promising solid-state electrolytes.

During the preparation of oxide solid-state electrolyte membranes, a release film is generally provided on the oxide solid-state electrolyte membrane body to protect the oxide solid-state electrolyte membrane. The release films are typically prepared by coating an acrylic, polyurethane, or silicone adhesive on a polyethylene terephthalate (PET) substrate. However, when the release film is detached from the oxide solid-state electrolyte membrane body, problems such as structural damage to the membrane body and difficult release often occur. Therefore, there is a room for improvement in the art.

### SUMMARY

In view of this, a release film for an oxide solid-state electrolyte membrane and the oxide solid-state electrolyte membrane are provided.

A release film for an oxide solid-state electrolyte membrane includes a release substrate layer and an EVA functionalized coating applied to a surface of the release substrate layer. The EVA functionalized coating has a vinyl acetate content ranging from 10% to 50%.

An oxide solid-state electrolyte membrane includes a release film, an oxide solid-state electrolyte membrane body, and a carrier. The oxide solid-state electrolyte membrane body is located between the release film and the carrier, and the release film is bonded to the oxide solid-state electrolyte membrane body through the EVA functionalized coating.

The release film for the oxide solid-state electrolyte membrane includes an EVA functionalized coating. Due to the matching adhesive force between the release film and the oxide solid-state electrolyte membrane body, the release film is completely bonded during the bonding process, and the matching dyne values prevent gas from penetrating between the release film and the membrane body during preparation, avoiding appearance abnormalities and effectively protecting the oxide solid-state electrolyte membrane body. When the release film is detached from the surface of the oxide solid-state electrolyte membrane body, the release film does not damage the membrane body surface and is easy to release. When the oxide solid-state electrolyte membrane body is used for full battery assembly, the oxide solid-state electrolyte membrane body has no impact on the battery's electrical properties.

### BRIEF DESCRIPTION OF THE DRAWINGS

Implementations of the present technology will now be described, by way of example only, with reference to the attached figures.
FIG. 1 is a diagrammatic view of an oxide solid-state electrolyte membrane according to an embodiment of the present disclosure.
FIG. 2 is a diagrammatic view of a release film for the oxide solid-state electrolyte membrane according to an embodiment of the present disclosure.
FIG. 3 is a diagrammatic view of the release film of the solid-state electrolyte membrane bonded to the oxide solid-state electrolyte membrane body according to an embodiment of the present disclosure.
FIG. 4 is similar to FIG. 3, but showing the release film bonded to the oxide solid-state electrolyte membrane body, viewed from another angle.
FIG. 5 is a diagrammatic view of a release film without an EVA functionalized coating bonded to the oxide solid-state electrolyte membrane body.
FIG. 6 is similar to FIG. 5, but showing the release film without the EVA functionalized coating bonded to the oxide solid-state electrolyte membrane body, viewed from another angle.
FIG. 7 is a Scanning Electron Microscope (SEM) image of a surface of the oxide solid-state electrolyte membrane body without a release film according to an embodiment of the present disclosure.
FIG. 8 is an SEM image of the surface of the oxide solid-state electrolyte membrane body after peeling off the release film with an adhesive force of 1 g/inch according to an embodiment of the present disclosure.
FIG. 9 is an SEM image of the surface of the oxide solid-state electrolyte membrane body after peeling off the release film with an adhesive force of 15 g/inch according to an embodiment of the present disclosure.
FIG. 10 is a diagrammatic view of a carrier of the oxide solid-state electrolyte membrane according to an embodiment of the present disclosure.
FIG. 11 is a diagrammatic view of a method of preparing an oxide solid-state electrolyte membrane using a roll-to-roll (RTR) process according to an embodiment of the present disclosure.
FIG. 12 is an electrical curve of a full battery assembled with the solid-state electrolyte membrane without the release film according to an embodiment of the present disclosure.
FIG. 13 is an electrical curve of a full battery assembled by taking out the oxide solid-state electrolyte membrane body after the release film with a 0.5 µm-thick EVA functionalized coating bonded to the oxide solid-state electrolyte membrane body according to an embodiment of the present disclosure.
FIG. 14 is an electrical curve of a full battery assembled by taking out the oxide solid-state electrolyte membrane body after the release film with a 2.0 µm-thick EVA functionalized coating bonded to the oxide solid-state electrolyte membrane body according to an embodiment of the present disclosure.

### DETAILED DESCRIPTION

The release film for the oxide solid-state electrolyte membrane and the oxide solid-state electrolyte membrane of the present disclosure will be further described in detail below in conjunction with the accompanying drawings.

Unless otherwise defined, all technical and scientific terms used herein have the same meaning as commonly understood by those skilled in the technical field of the embodiments of this application. The terms used herein are only for the purpose of describing specific embodiments and are not intended to limit the embodiments of this application.

Additionally, the terms used herein are only for describing specific embodiments and are not intended to limit the embodiments. A statement used in the singular includes the plural statement unless it has a clearly different meaning in the context. In this specification, the terms "comprise" and "have" indicate the presence of the recited features, wholes, steps, operations, components, and/or structures, and do not exclude the presence or addition of one or more features, wholes, steps, operations, components, structures, and/or combinations thereof.

Furthermore, the numerical values included herein fall within the allowable deviation range for specific values determined by those of ordinary skill in the art considering errors related to measuring specific quantities (e.g., limitations of the measurement system). For example, it may mean within one or more standard deviations from the stated value, or within ±20%, ±10%, or ±5%.

The technical solutions of the present disclosure are further described in detail below according to the specification and drawings in conjunction with specific embodiments.

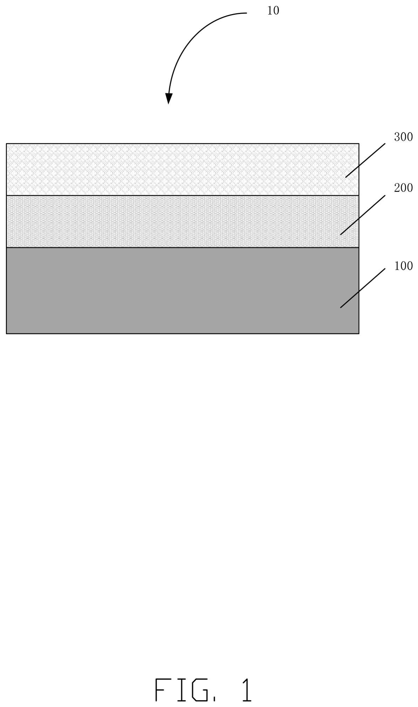

Referring to FIG. 1, FIG. 1 is a diagrammatic view of an oxide solid-state electrolyte membrane according to an embodiment of the present disclosure. The oxide solid-state electrolyte membrane 10 sequentially includes, from bottom to top, a carrier 100 of the oxide solid-state electrolyte membrane (hereinafter referred to as a "carrier"), an oxide solid-state electrolyte membrane body 200, and a release film 300 for the oxide solid-state electrolyte membrane (hereinafter referred to as a "release film"). The lower layer is the carrier 100 with a thickness of 120-130 µm, the middle layer is the oxide solid-state electrolyte membrane body 200 with a thickness of 20-50 µm, and the upper layer is the release film 300 with a thickness of 40.5-52 µm.

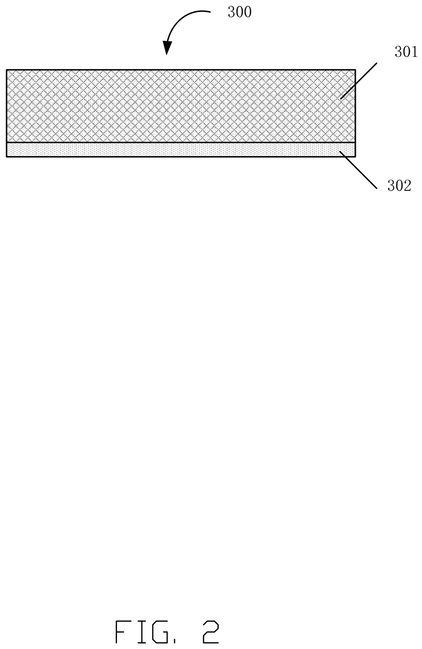

Referring to FIG. 2, FIG. 2 is a diagrammatic view of the release film 300 for the oxide solid-state electrolyte membrane according to an embodiment of the present disclosure. The release film 300 includes a release substrate layer 301 and a functionalized coating 302 of ethylene-vinyl acetate copolymer (hereinafter referred to as a "EVA functionalized coating 302"). Since EVA exhibits different properties depending on a content of VA (vinyl acetate), such as resilience, flexibility, adhesiveness, rigidity, wear resistance, electrical insulation, solubility, stress resistance, crack resistance, impact performance, etc., the content of the VA (vinyl acetate) of the EVA functionalized coating 302 used in the present disclosure must be from 15% to 50%. Preferably, the content of the VA (vinyl acetate) of the EVA functionalized coating 302 is from 30% to 40%.

The release substrate layer 301 may be made of a polymer such as polyethylene terephthalate (PET) or polypropylene (PP), and a thickness of the release substrate layer 301 is 40 µm to 50 µm. A surface of the release substrate layer 301 is coated with the EVA functionalized coating 302 having an adhesive force of 1 to 15 g/inch. EVA is a thermoplastic polymer, and the EVA functionalized coating slurry is 100% EVA, which is formed into a film by co-thermal extrusion with the release substrate layer 301. An adhesive force of the EVA functionalized coating 302 can increase a degree of adhesion between the release substrate layer 301 and the oxide solid-state electrolyte membrane body 200. "Adhesion" refers to the tight bonding between the release substrate layer 301 and the oxide solid-state electrolyte membrane body 200 through the EVA functionalized coating 302 in a state close to vacuum.

Referring to the table below, in the release film 300, the thicker the EVA functionalized coating 302, the higher the adhesive force. A number of bubbles penetrating between the release film 300 and the oxide solid-state electrolyte membrane body 200 and an appearance of the solid-state electrolyte membrane surface are shown in the following table.

| (Average) Thickness of Functionalized Coating (µm) | Adhesive Force (g/inch) | Number of Penetrating Bubbles (per/1m) | Appearance of Solid-State Electrolyte Membrane Surface (after Release) |
|---|---|---|---|
| 0 | 0 | 7 | NG (Appearance abnormality caused by bubbles) |
| 0.5 | 1 | 0 | OK |
| 1.0 | 7 | 0 | OK |
| 1.5 | 11 | 0 | OK |
| 2.0 | 15 | 0 | OK |
| 2.5 | 25 | 0 | OK |

It can be seen from the above table that when a thickness of the EVA functionalized coating 302 is less than 2.5 µm, such as the thickness of the EVA functionalized coating 302 is 0.5 µm to 2.0 µm, the release film 300 has a suitable adhesive force, no bubbles are formed between the release film 300 and the oxide solid-state electrolyte membrane body 200, and the appearance of the solid-state electrolyte membrane surface is normal. That is, the release film 300 is completely bonded to the oxide solid-state electrolyte membrane body 200 during the bonding process. However, since the coating process may be affected by slight differences in process parameters such as the environment, equipment, and materials, the test results may have some variability. Therefore, in the embodiment, the limiting conditions for the EVA functionalized coating 302 meets at least one of following conditions.

First, the thickness of the EVA functionalized coating 302 is less than 0.5 µm and the adhesive force test data is greater than or equal to 1 g/inch.

Second, the thickness of the EVA functionalized coating 302 is from 0.5 µm to 2.0 µm and/or the test data of the adhesive force is from 1 g/inch to 15 g/inch.

Third, the thickness of the EVA functionalized coating 302 is greater than 2.0 µm and the test data of the adhesive force is less than 25 g/inch, such as less than or equal to 15 g/inch.

In the embodiment, the range of preferred thickness of the EVA functionalized coating 302 is 0.5 µm to 2.0 µm. Preferably, the optimal thickness of the EVA functionalized coating 302 is 0.5 µm. Due to the thin thickness, a winding length of the RTR coil is longer under the same coil outer diameter.

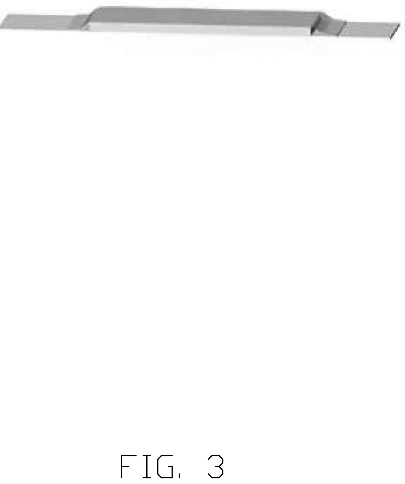

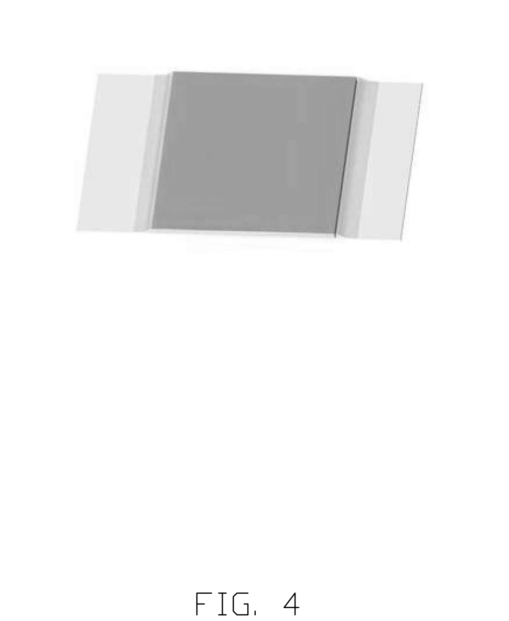

Specifically, referring to FIGS. 3 and 4, since the release film 300 has a matching adhesive force with the oxide solid-state electrolyte membrane body 200, the release film 300 is completely bonded during the bonding process, and due to the matching dyne values, gas does not penetrate between the release film 300 and the oxide solid-state electrolyte membrane body 200 during preparation, causing appearance abnormalities.

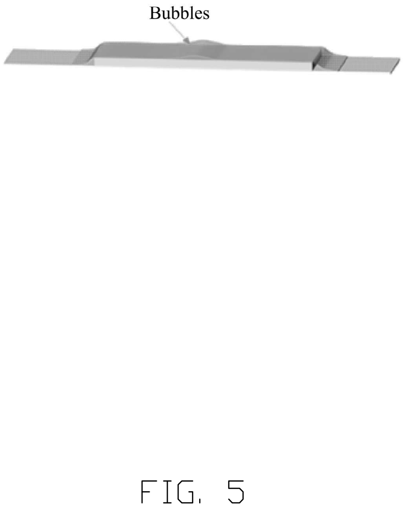

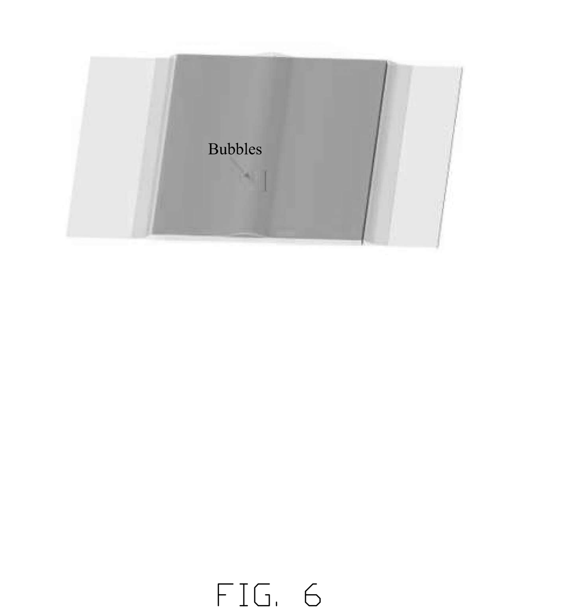

Referring to FIGS. 5 and 6, FIGS. 5 and 6 show a release film without the EVA functionalized coating 302 bonded to the oxide solid-state electrolyte membrane body 200. Due to insufficient adhesive force, gas easily penetrates between the release film and the oxide solid-state electrolyte membrane body 200 during the bonding process due to unevenness between materials, forming bubbles. Since the bubbles exist between the release film 300 and the oxide solid-state electrolyte membrane body 200, the bubbles are subsequently wound into the coil, causing appearance abnormalities of the membrane surface.

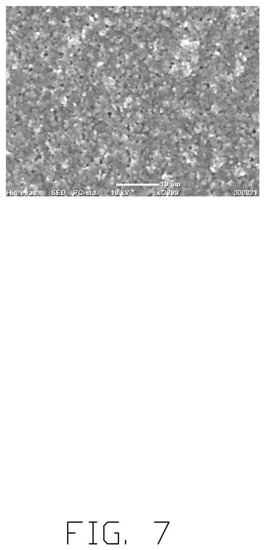

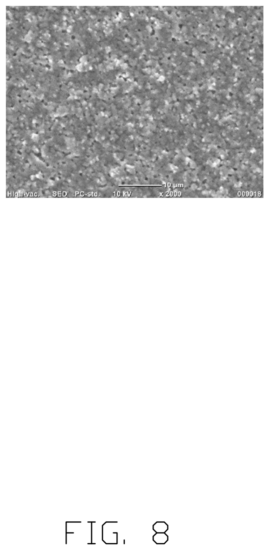

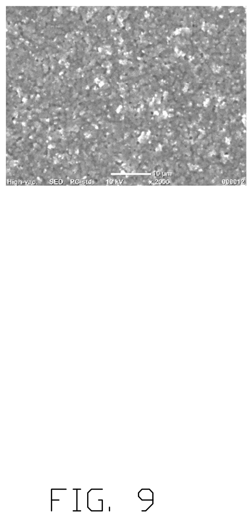

Referring to FIGS. 7 to 9, FIG. 7 is an SEM image of a surface of the oxide solid-state electrolyte membrane body without the release film 300. FIG. 8 is an SEM image of the surface of the oxide solid-state electrolyte membrane body after peeling off the release film 300 with an adhesive force of 1 g/inch according to the present disclosure. FIG. 9 is an SEM image of the surface of the oxide solid-state electrolyte membrane body after peeling off the release film 300 with an adhesive force of 15 g/inch according to the present disclosure. Comparing the SEM images of the three oxide solid-state electrolyte membrane body surfaces, there is basically no difference, indicating that the release film 300 provided by the present disclosure does not damage the surface of the oxide solid-state electrolyte membrane body, and increasing the adhesive force of the EVA functionalized coating 302 of the release film 300 to a certain range does not damage the surface of the oxide solid-state electrolyte membrane body.

The following is a comparative analysis of the composition and characteristics between the release film provided by the present disclosure and other release films. For details, referring to the table below.

| Interface | PET | | PET | | PET | PP | PO | PVC |
|---|---|---|---|---|---|---|---|---|
| | Acrylic Adhesive System | | Polyurethane Adhesive System | | Silicone Adhesiv e System | EVA | Acrylic Adhesive System | |
| | PA01, Curing Agent 3% | PA01, Curing Agent 1% | PU01, Curing Agent 3% | PU02, Curing Agent 1% | PS01, Catalyst 0.5% | PE01 , Curin g Agen t 1% | OA01, Curing Agent 1% | OA0 1, Curin g Agen t 1% |
| Coating (Average) Thickness (µm) | 0.5-2.0 | 0.5-2.0 | 0.5-2.0 | 0.5-2.0 | 0.5-2.0 | 0.5-2.0 | 0.5-2.0 | 0.5-2.0 |
| Substrate (Average) Thickness (µm) | 50 | 50 | 50 | 50 | 50 | 50 | 60 | 80 |
| Coating Appearance | OK | OK | OK | OK | OK | OK | OK | OK |
| Flatness | OK | OK | OK | OK | OK | OK | OK | OK |
| Adhesion | Warpi ng | Warping | Warpin g | Warpin g | OK | OK | OK | Unsta ble |
| Adhesive Force | 3 Peelin gs | 10g Peel | 3 Peelin gs | 10g Peel | 10g Sticking (Difficul t to Peel) | 10g OK | 10g Peel | 30g Peel |

It can be seen from the above table that the release film PE01 provided by the present disclosure has superior characteristics.

The oxide solid-state electrolyte membrane body 200 may be a lithium lanthanum zirconium oxide (LLZO) solid-state electrolyte membrane body, a lithium aluminum titanium phosphate (LATP) solid-state electrolyte membrane body, a lithium aluminum germanium phosphate (LAGP) solid-state electrolyte membrane body, a lithium lanthanum titanate (LLTO) solid-state electrolyte membrane body, etc., and is not limited thereto, and may also be other solid-state electrolyte membrane bodies.

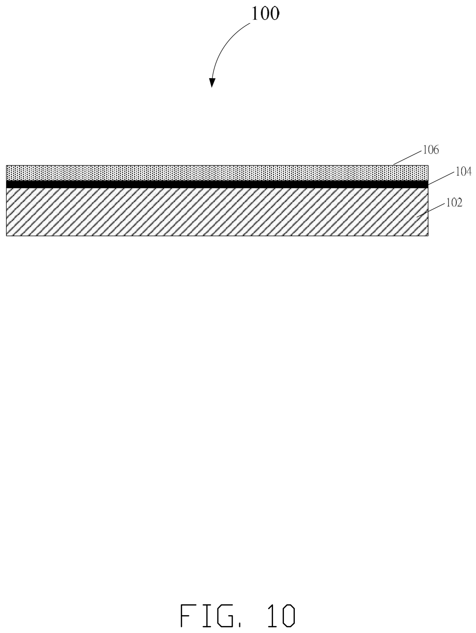

Referring to FIG. 10, the carrier 100 can support the oxide solid-state electrolyte membrane body 200. The carrier 100 includes a base 102, a first coating 104, and a second coating 106. The first coating 104 is coated on a surface of the base 102, the second coating 106 is coated on a surface of the first coating 104, and the first coating 104 is disposed between the base 102 and the second coating 106.

The base 102 is a material with high temperature resistance and low shrinkage at high temperatures, such as polyethylene terephthalate (PET), polyimide (PI), polypropylene (PP), propylene oxide (PO), triacetate cellulose (TAC), cyclic olefin polymer (COP), etc. Preferably, after the base 102 is maintained at a temperature of greater than or equal to 160 degree Celsius for at least 10 minutes, a thermal shrinkage rates in a machine direction (MD) and transverse direction (TD) are both less than 0.5%.

A range of thickness of the base 102 is preferably 120 µm-130 µm, but is not limited thereto. The base 102 has good mechanical properties. Preferably, a tensile strength of the base 102 in the MD direction is greater than 18 N/m², and the tensile strength in the TD direction is greater than 13 N/m².

A coefficient of friction of the base 102 is preferably greater than 0.4 µs. A wetting index of the outer surface of the base 102 is preferably greater than 55, and the wetting index of the inner surface is preferably less than 42, wherein the outer surface refers to the surface of the base 102 not in contact with the first coating 104, and the inner surface refers to the surface of the base 102 in contact with the first coating 104.

The first coating 104 is an adhesive layer for increasing the bonding force between the base 102 and the second coating 106. The thickness of the first coating is preferably from 0.5 µm to 2.0 µm, but is not limited thereto.

Preferably, the first coating 104 is a functionalized adhesive layer. More preferably, the first coating 104 is a polyethyleneimine (PEI) functionalized adhesive layer. The PEI functionalized adhesive layer provides functionalized biting force to appropriately bond the base 102 and the second coating 106, so that the carrier 100 exhibits a specific surface energy that matches the oxide solid-state electrolyte, enabling the oxide solid-state electrolyte colloid to be effectively coated and bitten on the surface of the carrier 100. After a series of baking processes, an oxide solid-state electrolyte membrane body 200 is formed on the surface of the carrier 100, which can be effectively bonded to the carrier 100.

The second coating 106 is a resin layer, and the thickness of the second coating 106 is preferably from 10 µm to 12 µm, but is not limited thereto. Preferably, the second coating is a silicone-grafted resin layer. The mass ratio of silicon in the silicone-grafted resin layer is preferably from 1% to 5%. More preferably, the second coating is a silicone-grafted acrylic resin (methyl acrylate).

Referring to FIGS. 1 and 2, an oxide solid-state electrolyte membrane 10 is provided according to an embodiment of the present disclosure. The release substrate layer 301 of the release film 300 in the oxide solid-state electrolyte membrane 10 is made of PP with a thickness of 50 µm, and the surface of the release substrate layer 301 is coated with an EVA functionalized coating 302 having an adhesive force. The thickness of the EVA functionalized coating 302 is 0.5 µm, and the adhesive force is 1 g/inch. The adhesive force of the EVA functionalized coating 302 is used to increase a degree of adhesion with the oxide solid-state electrolyte membrane body 200.

The oxide solid-state electrolyte membrane body 200 is formed from a lithium lanthanum zirconium oxide (LLZO) solid-state electrolyte gel. A mass ratio of LLZO particles in the LLZO solid-state electrolyte gel is 5-45%, and a cumulative particle size distribution percentages of the LLZO particles are D50 <50 nm and D90 <200 nm. The LLZO solid-state electrolyte gel contains a polymer, which is a mixture of PVDF1, PVDF2, PVDF3, PMMA, and LiTFSI. Among them, a molecular weight of PVDF1 is greater than 2 million daltons (Da); a molecular weight of PVDF2 is greater than 1 million daltons (Da); and a molecular weight of PVDF3 is greater than 300,000 daltons (Da). In the polymer, the mass percentages of each component are as follows: PVDF1 is 0-30%, PVDF2 is 0-30%, PVDF3 is 0-30%, PMMA is 0-10%, and LiTFSI is 0-25%. The solvent in the LLZO solid-state electrolyte gel is dimethylacetamide (DMAC): N-methylpyrrolidone (NMP): tetrahydrofuran (THF): methyl ethyl ketone (MEK): toluene = (70-85):(1-10):(1-15):(1-7):(1-5).

The base 102 in the carrier 100 is a PET sheet with a thickness of 125 µm, tensile strength MD is greater than 18 N/m², TD is greater than 13 N/m², coefficient of friction is greater than 0.4 µs. The thermal shrinkage rates of the base 102 in both the transverse direction and the longitudinal direction are both less than 0.5%, outer surface wetting index is greater than 55, and inner surface wetting index is less than 42. The first coating 104 is polyethyleneimine (PEI) with a degree of polymerization of about 90-110 and a monomer molecular weight of 43, and a thickness of the adhesive layer is 1 µm. The second coating 106 is a polysiloxane-grafted acrylic resin, in which the mass percentage of silicon is about 1%.

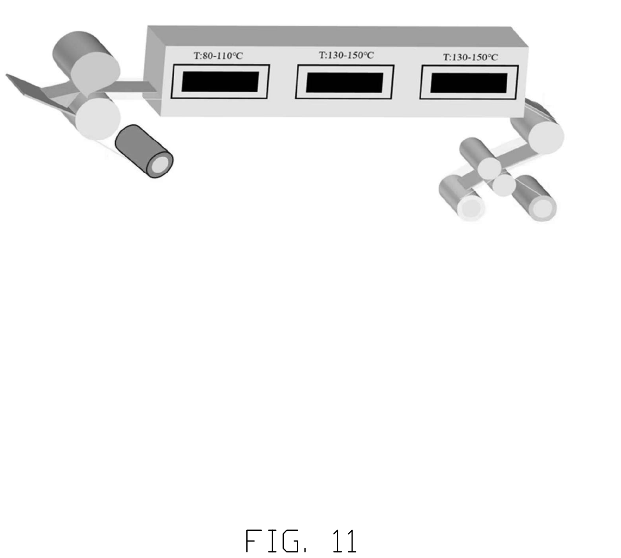

Referring to FIG. 11, a method for preparing an oxide solid-state electrolyte membrane using a roll-to-roll (RTR) process is provided according to an embodiment of the present disclosure. First, the solid-state electrolyte gel is coated on the surface of the carrier by a blade coating method, followed by a drying treatment to form the oxide solid-state electrolyte membrane body with a thickness of 20 µm to 50 µm. Specifically, the carrier coated with the solid-state electrolyte gel is placed in an oven for three-stage temperature baking. In the first stage, a heating temperature is set to 80 degree Celsius to 110 degree Celsius, with an air intake of the windmill at 30 Hz and the air exhaust at 25 Hz. In the second stage, for initial solvent evaporation, the heating temperature is 130 degree Celsius to 150 degree Celsius, with the air intake of the windmill at 30 Hz and the air exhaust at 25 Hz. In the third stage, the heating temperature is 130 degree Celsius to 150 degree Celsius, with the air intake of the windmill at 43 Hz and the air exhaust at 25 Hz. A higher windmill frequency results in greater air volume, affecting the solvent concentration and evaporation efficiency in the oven. Next, the release film provided by the present disclosure is bonded to the surface of the oxide solid-state electrolyte membrane body away from the carrier. Finally, the oxide solid-state electrolyte membrane body 200 and the release film 300 are wound into a roll to form the oxide solid-state electrolyte membrane.

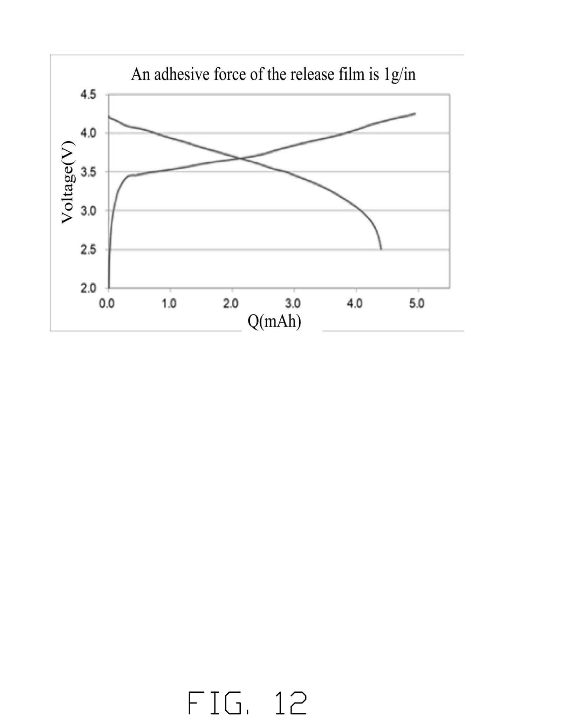

Referring to FIG. 12, the electrical curve of a full battery assembled with a solid-state electrolyte membrane without a release film is shown. The positive electrode is NCM811, the negative electrode is SiO-blended graphite, with an initial coulombic efficiency (ICE) of 88.73% and a positive electrode specific capacity of 203.05 mAh/g.

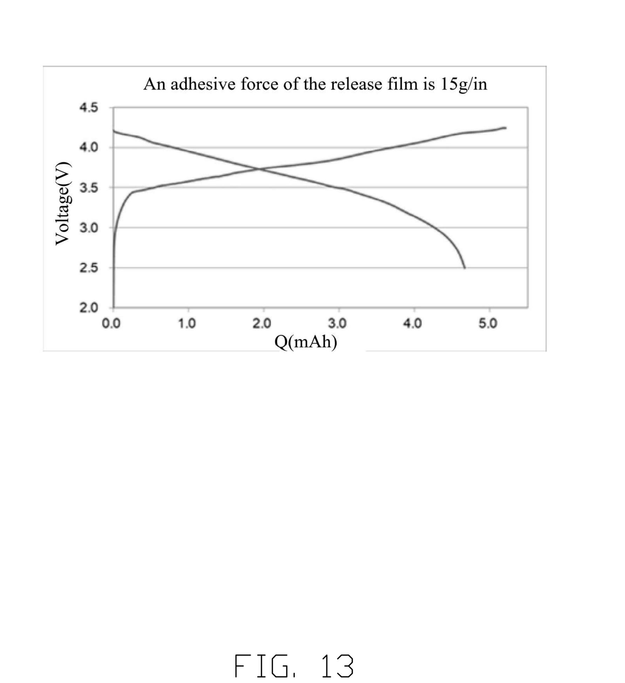

Referring to FIG. 13, after the release film with a 0.5 µm-thick EVA functionalized coating is bonded to the oxide solid-state electrolyte membrane body, the membrane body is taken out for full battery assembly. A positive electrode is NCM811, a negative electrode is SiO-blended graphite, with an ICE of 89.01% and a positive electrode specific capacity of 203.6 mAh/g. Compared with FIG. 12, FIG. 13 indicates that the release film with a 0.5 µm-thick EVA functionalized coating has no impact on the electrical properties of the battery.

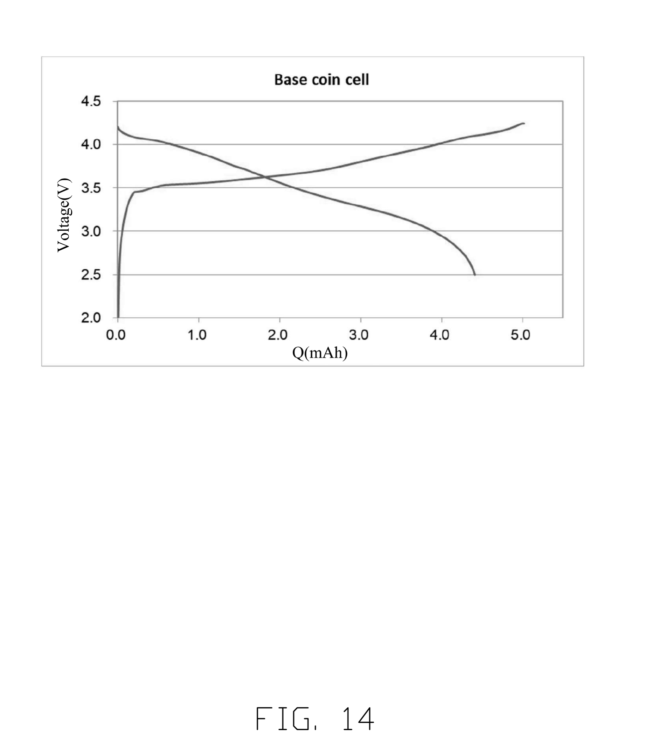

Referring to FIG. 14, after the release film with a 2.0 µm-thick EVA functionalized coating is bonded to the oxide solid-state electrolyte membrane body, the membrane body is taken out for full battery assembly. The positive electrode is NCM811, the negative electrode is SiO-blended graphite, with an ICE of 89.01% and a positive electrode specific capacity of203.6 mAh/g. Compared with FIG. 12, this shows that the release film with a 2.0 µm-thick EVA functionalized coating has no effect on the battery's electrical properties.

The release film for the oxide solid-state electrolyte membrane and the oxide solid-state electrolyte membrane provided by the present disclosure have the following advantages. First, due to the matching adhesive force between the release film and the oxide solid-state electrolyte membrane body, the release film is completely bonded during the bonding process, and the matching dyne values prevent gas from penetrating between the release film and the membrane body during preparation, avoiding appearance abnormalities and effectively protecting the oxide solid-state electrolyte membrane body. Second, when the release film is detached from the surface of the oxide solid-state electrolyte membrane body, the release film does not damage the membrane body surface and is easy to release. When the oxide solid-state electrolyte membrane body is used for full battery assembly, the oxide solid-state electrolyte membrane body has no impact on the battery's electrical properties.

Additionally, those skilled in the art can make other changes within the spirit of the present disclosure, and such changes made in accordance with the spirit of the present disclosure should all be included within the scope of protection claimed by the present disclosure.

## Claims

1. A release film (300) configured for an oxide solid-state electrolyte membrane, the release film (300) comprising: a release substrate layer (301) and a functionalized coating of ethylene vinyl acetate copolymer (hereinafter referred to as "EVA functionalized coating (302)") applied to a surface of the release substrate layer (301), wherein the EVA functionalized coating (302) has a vinyl acetate content ranging from 10% to 50%.

2. The release film (300) of claim 1, wherein the content of the vinyl acetate of the EVA functionalized coating (302) is from 15% to 50%.

3. The release film (300) of claim 1, wherein the release film (300) consists of the release substrate layer (301) and the EVA functionalized coating (302), and the vinyl acetate content of the EVA functionalized coating (302) is from 30% to 40%.

4. The release film (300) according to any one of claims 1 to 3, wherein a thickness of the EVA functionalized coating (302) is less than 2.5 µm.

5. The release film (300) according to any one of claims 1 to 3, wherein a thickness of the EVA functionalized coating (302) is from 0.5 µm to 2.0 µm.

6. The release film (300) according to any one of claims 1 to 3, wherein an adhesive force of the EVA functionalized coating (302) is less than 25 g/inch.

7. The release film (300) according to any one of claims 1 to 3, wherein an adhesive force of the EVA functionalized coating (302) is from 1 g/inch to 15 g/inch.

8. The release film (300) according to any one of claims 1 to 3, wherein the EVA functionalized coating (302) meets at least one of following conditions:
a thickness is less than 0.5 µm and an adhesive force is greater than or equal to 1 g/inch; or
a thickness is greater than 2.0 µm and an adhesive force less than or equal to 15 g/inch.

9. The release film (300) according to any one of claims 1 to 8, wherein the release substrate layer (301) is made of a thermoplastic polymer selected from polyethylene terephthalate or polypropylene.

10. The release film (300) according to claim 1 or 9, wherein a thickness of the release substrate layer (301) is from 40 µm to 50 µm.

11. An oxide solid-state electrolyte membrane (10), comprising:
a release film (300) according to any one of claims 1 to 10;
an oxide solid-state electrolyte membrane body (200); and
a carrier (100);
wherein the oxide solid-state electrolyte membrane body (200) is located between the release film and the carrier (100), and the release film is bonded to the oxide solid-state electrolyte membrane body (200) through the EVA functionalized coating (302).

12. The oxide solid-state electrolyte membrane (10) according to claim 11, wherein the carrier (100) comprises a base (102), a first coating (104), and a second coating (106), the first coating (104) is applied to a surface of the base (102), the second coating (106) is applied to a surface of the first coating (104), the first coating (104) is a polyethyleneimine-functionalized adhesive layer, and the second coating (106) is made of silicone-grafted acrylic resin.

13. The oxide solid-state electrolyte membrane (10) according to claim 12, wherein the base (102) is made of a polymer having following characteristics: after being maintained at a temperature of greater than or equal to 160 degree Celsius for at least 10 minutes, a thermal shrinkage rate of the polymer is less than 0.5% in both a machine direction and a transverse direction.

14. The oxide solid-state electrolyte membrane (10) according to claim 12, wherein a tensile strength of the base (102) in the MD direction is greater than 18 N/m², and the tensile strength in the TD direction is greater than 13 N/m².

15. The oxide solid-state electrolyte membrane (10) according to claim 11, wherein the oxide solid-state electrolyte membrane body (200) is selected from lithium lanthanum zirconium oxide (LLZO), lithium aluminum titanium phosphate (LATP), lithium aluminum germanium phosphate (LAGP), or lithium lanthanum titanate (LLTO).
